# FASCICULE DE BREVET EUROPEEN

(11) **EP 3 905 632 B1**
(45) Date de publication et mention de la délivrance du brevet: **12.06.2024**
(21) Numéro de dépôt: 21169581.2
(22) Date de dépôt: 21.04.2021
(51) Int. Cl.: H04L 9/40, B65F 1/16

(54) **SYSTEME ET PROCEDE DE CONTROLE D'ACCES D'UN UTILISATEUR A UN CONTENEUR DE DECHETS**
SYSTEM UND VERFAHREN ZUR KONTROLLE DES ZUGANGS EINES NUTZERS ZU EINEM ABFALLBEHÄLTER
SYSTEM AND METHOD FOR CONTROLLING ACCESS OF A USER TO A WASTE CONTAINER

(30) Priorité: 28.04.2020 FR 2004197
(43) Date de publication de la demande: 03.11.2021
(73) Titulaire: BH Technologies, 38000 Grenoble (FR)
(72) Inventeur: MAURIN, Alexis, 38610 VENON (FR); FIRAGUAY, Kevin, 38130 ECHIROLLES (FR)
(74) Mandataire: Plasseraud IP

(56) Documents cités:
- EP-A1- 3 125 201
- EP-A1- 3 522 122
- US-A1- 2014 035 721
- US-A1- 2015 307 273

## Description

### Domaine technique

La présente invention relève du domaine de la gestion de conteneurs de déchets. Plus particulièrement, la présente divulgation concerne un système pour contrôler l'accès d'un utilisateur à un conteneur de déchets. La présente invention concerne également un dispositif permettant de contrôler l'accès d'un utilisateur à un conteneur de déchets.

### Technique antérieure

Des systèmes pour contrôler l'accès d'un utilisateur à un conteneur de déchets sont classiquement employés pour s'assurer que seuls les utilisateurs autorisés peuvent accéder au conteneur. En règle générale, seuls les utilisateurs appartenant à la commune et ayant payés les frais nécessaires sont autorisés d'accès au conteneur.

Le contrôle d'accès peut être mis en oeuvre par une grande variété de systèmes. Par exemple, un code d'identification peut être fourni à l'utilisateur pour être entré dans un pavé numérique disposé sur le conteneur. L'utilisateur peut également utiliser une carte RFID à placer sur un lecteur disposé sur le conteneur.

Par ailleurs, il est connu d'envoyer les données concernant les accès d'utilisateurs au conteneur vers un serveur distant. Ceci permet notamment de gérer la facturation des utilisateurs, ainsi que le ramassage des déchets. Classiquement, le conteneur est connecté à un réseau de télécommunication pour l'envoi des données. Cependant, une telle communication entraine des coûts d'exploitation, et nécessite une énergie importante.

Ainsi, le document EP3522122 propose d'exploiter le smartphone de l'utilisateur, à la fois pour autoriser l'accès au conteneur et pour envoyer des données vers le serveur. Pour ce faire, le conteneur est équipé d'une interface de communication courte portée. L'utilisateur s'approche du conteneur pour établir une communication entre le smartphone et l'interface de communication. Le smartphone, connecté au réseau de télécommunication, peut alors interroger le serveur pour autoriser ou refuser l'accès au conteneur. Le smartphone peut également recevoir des données du conteneur à envoyer vers le serveur.

Néanmoins, ce système nécessite une communication entre le serveur et le smartphone lorsque l'utilisateur est à proximité du conteneur. Le smartphone doit alors être connecté au réseau de télécommunication pour accéder au conteneur. Ceci peut poser problème lorsque le conteneur est dans une zone blanche, c'est à dire dépourvue de couverture réseau, ou lorsque le smartphone n'est pas correctement connecté au réseau de télécommunication, ou encore lorsque la communication smartphone/serveur est trop lente (par exemple lorsque le serveur ou un routeur est surchargé).

US 2014/0035721 A1 divulgue un procédé d'accès à un casier sécurisé par l'intermédiaire d'un terminal mobile. Dans ce procédé, l'accès au casier peut être autorisé par un mot de passe, et un message d'accès effectué est transmis ensuite du casier au terminal mobile puis à un serveur de gestion de casiers.

Un but de l'invention est de fournir un système de contrôle d'accès permettant l'accès de l'utilisateur au conteneur sans nécessiter de connexion au réseau de télécommunication, tout en permettant un transfert de données vers le serveur.

### Résumé

A cette fin, la présente invention propose un système de contrôle d'accès d'un utilisateur à un conteneur de déchets tel que défini par la revendication 1.

Ainsi, un utilisateur peut télécharger le jeton électronique autorisant l'accès au conteneur avant de se rendre au conteneur. Le contrôle d'accès au conteneur ne nécessite pas de connexion à un réseau de télécommunication. Le dispositif de communication peut être déconnecté du réseau de télécommunication. De même, le dispositif d'accès ne nécessite pas de connexion au réseau de télécommunication moyenne ou longue portée, permettant d'obtenir une autonomie énergétique substantiellement améliorée du dispositif d'accès, la consommation électrique du coupleur courte portée restant très raisonnable. Le conteneur peut être disposé dans une zone blanche, non couverte par le réseau de télécommunication.

Les caractéristiques exposées dans les paragraphes suivants peuvent, optionnellement, être mises en oeuvre. Elles peuvent être mises en oeuvre indépendamment les unes des autres ou en combinaison les unes avec les autres.

Chaque jeton électronique peut être spécifique à l'utilisateur et/ou au dispositif de communication associé à l'utilisateur. L'utilisation des jetons permet alors d'associer un accès au conteneur à l'utilisateur. L'utilisateur peut notamment être facturé selon les accès effectués. En outre, l'accès au conteneur est sécurisé, n'étant autorisé qu'à des utilisateurs connus.

Chaque jeton électronique peut être spécifique au moins un parmi : la géo-position du conteneur, un flux de déchets destiné à être reçu dans le conteneur, un domaine d'activité ou un conteneur. Ainsi, il apparaît possible de s'assurer que l'utilisateur dépose ses déchets dans le conteneur approprié. Il apparaît également possible de facturer l'utilisateur selon le type de déchets déposés, selon sa géo position ou selon son domaine d'activité.

Chaque jeton électronique peut comporter une date d'expiration et/ou autoriser un unique accès au conteneur. Les jetons électroniques facilitent alors la facturation, après la date d'expiration ou lors du téléchargement d'un jeton à usage unique. Les jetons électroniques peuvent être utilisés par des résidents pour accéder régulièrement au conteneur. Les jetons peuvent également être utilisés par des utilisateurs de passage, nécessitant un nombre limité d'accès au conteneur.

Dans un exemple particulier, chaque jeton électronique autorise une pluralité d'accès successifs à une pluralité de conteneurs. Un unique jeton électronique est alors téléchargé par l'utilisateur, facilitant le dépôt de ses déchets. En effet, il n'apparait pas nécessaire pour l'utilisateur de télécharger un nouveau jeton à chaque fois qu'il souhaite effectuer un dépôt ou lorsqu'il souhaite déposer dans deux conteneurs distincts. Le processus de dépôt des déchets est simplifié pour l'utilisateur.

Un accès au conteneur avec dépôt effectif est enregistré par le dispositif de communication, l'accès étant par la suite envoyé au serveur par le dispositif de communication. Ainsi, le dispositif de communication peut envoyer l'accès effectué au serveur lorsqu'un réseau de télécommunication est accessible. Le serveur peut alors assurer un suivi des accès effectués par une pluralité d'utilisateur. Le serveur peut alors contrôler la facturation des utilisateurs et/ou estimer un niveau de remplissage des conteneurs.

L'échange de données lors du contrôle d'accès comprend l'envoi d'un historique d'accès vers le dispositif de communication, l'historique étant par la suite envoyé au serveur par le dispositif de communication. Ainsi, la redondance des informations permet de s'assurer de la validité des accès reçus par le serveur. Par ailleurs, si un premier dispositif de communication n'est pas connecté à un réseau de télécommunication, un deuxième dispositif de communication peut transmettre les accès effectués par le premier dispositif de communication.

Le dispositif d'accès comporte un organe de verrouillage autorisant sélectivement un accès à un espace interne du conteneur afin que l'utilisateur puisse effectuer un dépôt de déchets, et un terminal permettant de communiquer avec le dispositif de communication et dans lequel l'organe de verrouillage est commandé par ledit terminal. Ainsi, l'accès au conteneur est impossible tant qu'un contrôle d'accès favorable n'a été effectué.

Le système peut comprendre au moins un capteur, associé au conteneur, de préférence un capteur de niveau de remplissage du conteneur, l'échange de données lors du contrôle d'accès peut alors comprendre l'envoi des données du ou de chaque capteur vers le dispositif de communication, les données étant par la suite envoyé au serveur par le dispositif de communication. Le serveur peut alors assurer un suivi du remplissage des conteneurs, par exemple pour organiser une collecte ou pour prévoir un besoin d'installation de nouveaux conteneurs. Le serveur peut également être informé de la condition d'un conteneur, par exemple pour effectuer un entretien.

Le dispositif de communication peut être configuré pour permettre à l'utilisateur d'effectuer un choix parmi une pluralité de conteneurs. Ainsi, l'utilisateur peut être informé du conteneur le plus proche, ou adapté à ses déchets, ou de conteneurs déjà utilisés précédemment.

Selon un autre aspect, il est proposé un procédé de contrôle d'accès d'un utilisateur à un conteneur de déchets tel que défini par la revendication 8.

Les caractéristiques exposées dans les paragraphes suivants peuvent, optionnellement, être mises en oeuvre. Elles peuvent être mises en oeuvre indépendamment les unes des autres ou en combinaison les unes avec les autres.

Le procédé peut comprendre, avant, le contrôle d'accès, la sélection d'un conteneur sur le dispositif de communication.

L'échange de données peut comprendre l'envoi d'un historique d'accès, enregistré par le dispositif d'accès, vers le dispositif de communication pour être envoyé vers le serveur.

L'échange de données comprend en outre l'envoi de données d'au moins un capteur, associé au conteneur, vers le dispositif de communication pour être envoyées vers le serveur.

### Brève description des dessins

D'autres caractéristiques, détails et avantages apparaîtront à la lecture de la description détaillée ci-après, et à l'analyse des dessins annexés, sur lesquels :
[Fig. 1] montre schématiquement un système de contrôle d'accès selon un mode de réalisation.
[Fig. 2] montre schématiquement les composants électroniques du système de contrôle d'accès de la figure 1.

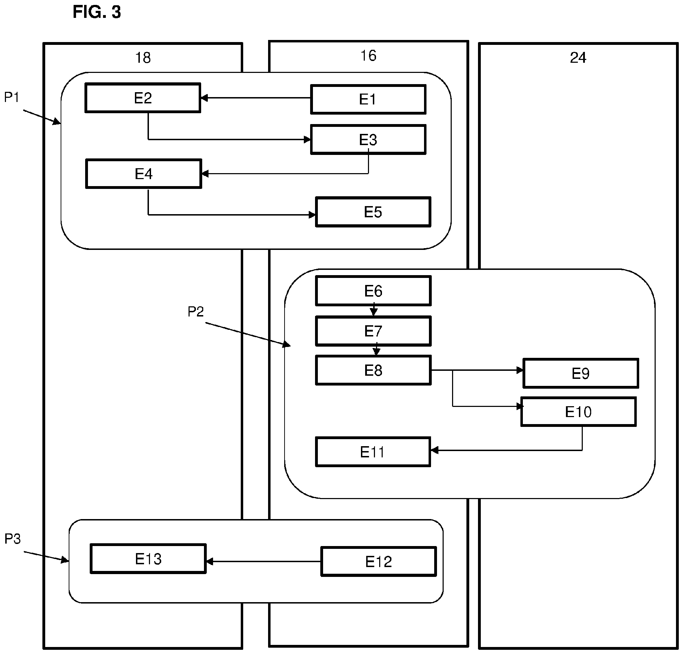

[Fig. 3] montre un organigramme d'une méthode mise en oeuvre par le système de contrôle d'accès de la figure 1.

### Description des modes de réalisation

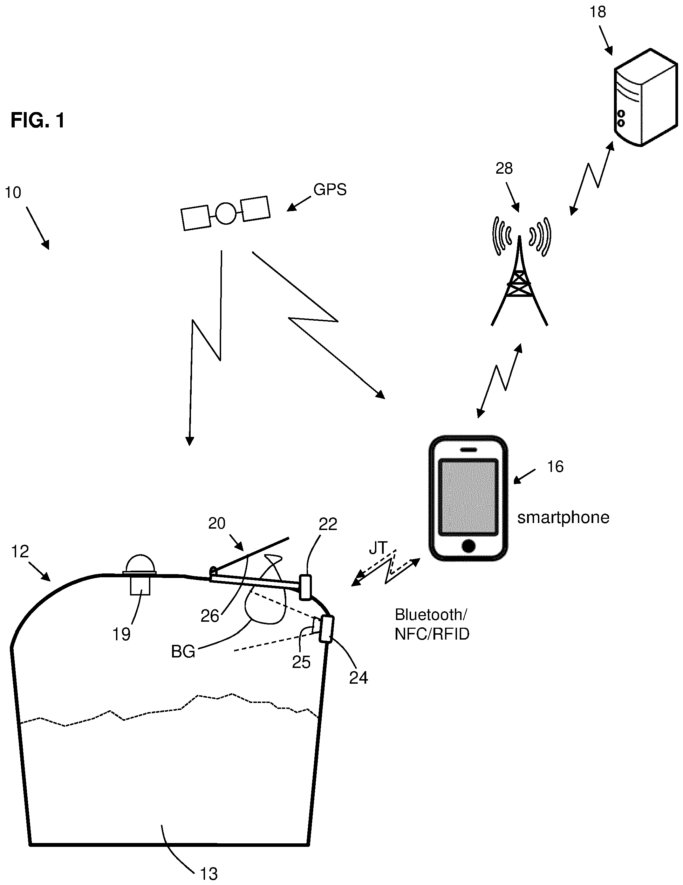

La figure 1 illustre de manière schématique un système de contrôle d'accès 10 d'un utilisateur à un conteneur de déchets. Le système comprend essentiellement un conteneur 12, un dispositif de communication 16 et un serveur 18.

### 1. Conteneur

Le conteneur 12 peut notamment prendre la forme d'un bac roulant ou fixe, d'une colonne aérienne, d'une colonne semi-enterrée ou d'une colonne enterrée.

Le conteneur 12 fait ici partie d'un point d'apport volontaire (PAV). Alors, des utilisateurs viennent déposer des déchets 13 au conteneur 12. Le conteneur est utilisé par une pluralité d'utilisateurs. Le conteneur est mis à disposition et exploité par un centre municipal ou une communauté de communes.

Le conteneur 12 peut être réservé à des utilisateurs au voisinage du point d'apport volontaire. Par exemple, le conteneur peut être réservé aux habitants d'une zone géographique, notamment une commune, une ville ou un quartier.

En outre, le conteneur 12 peut être réservé à des domaines spécifiques. Par exemple, le conteneur peut être réservé aux déchets 13 produits par des ménages. Le conteneur peut également être réservé au milieu professionnel, par exemple dans le domaine de la restauration.

De préférence, le conteneur 12 est destiné à recevoir des déchets 13 de type ordures ménagères. En effet, une redevance est demandée aux utilisateurs pour le dépôt de leurs ordures ménagères. Un contrôle d'accès apparaît ainsi particulièrement intéressant, pour limiter l'accès au conteneur 12 aux utilisateurs ayant payés la redevance.

En variante, le conteneur 12 peut être destiné à recevoir différents flux de déchets 13. Par exemple, le flux reçu par le conteneur peut être du verre, du carton ou du papier, ou du plastique (emballages).

Le conteneur 12 peut être équipé d'un capteur 19. Le capteur peut par exemple utiliser l'émission d'ondes sonores ou électromagnétiques dans le conteneur 12 pour mesurer le niveau de remplissage des déchets contenus dans le conteneur. En outre, le conteneur pourrait également être équipé de capteurs mesurant un poids des déchets dans le conteneur 12 et/ou une température à l'intérieur du conteneur 12.

Par ailleurs, le conteneur 12 peut être équipé d'un accessoire de captation 25. Les déchets peuvent être contenus dans un sac BG dont le poids ou le volume peuvent être mesuré(s) par l'accessoire de captation, afin de quantifier le dépôt de déchets et d'influer la facturation de l'utilisateur.

Le conteneur 12 peut être fermé par un couvercle 26. Lorsque le conteneur 12 est fermé par un couvercle 26, le couvercle peut être soulevé par l'utilisateur et cet utilisateur peut alors déposer le sac BG à l'intérieur du contener. Si l'utilisateur dépose plusieurs sacs, l'accessoire de captation peut enregistrer le passage de chaque sac.

En variante, le conteneur 12 peut être fermé grâce un sas (cas non illustré), ce sas permet de limiter le volume de chaque sac BG apporté. Le sas peut se présenter sous la forme d'un tambour ou d'un boisseau rotatif. Il peut y avoir un système de pesée dans le sas.

Par ailleurs, le conteneur 12 est pourvu d'un dispositif d'accès 20 comportant un organe de verrouillage 22 et un terminal 24.

L'organe de verrouillage 22 est agencé sur le conteneur 12 afin de verrouiller le couvercle 26 ou le sas du conteneur en position fermée. L'organe de verrouillage 22 permet, lorsqu'il est positivement activé, d'autoriser l'accès à l'espace interne du conteneur afin que l'utilisateur puisse effectuer un dépôt de déchets.

L'organe de verrouillage 22 est commandé par le terminal 24 en fonction du résultat de l'authentification d'un jeton électronique JT. Si le jeton est valide, l'organe de verrouillage 22 déverrouille le sas ou le couvercle 26 pendant une durée courte. Le déverrouillage peut être accompagné d'un retour sonore généré par l'organe de verrouillage 22 ou le terminal 24. Si le jeton n'est pas valide, l'organe de verrouillage 22 maintient l'interdiction d'accès à l'espace intérieur du conteneur 12.

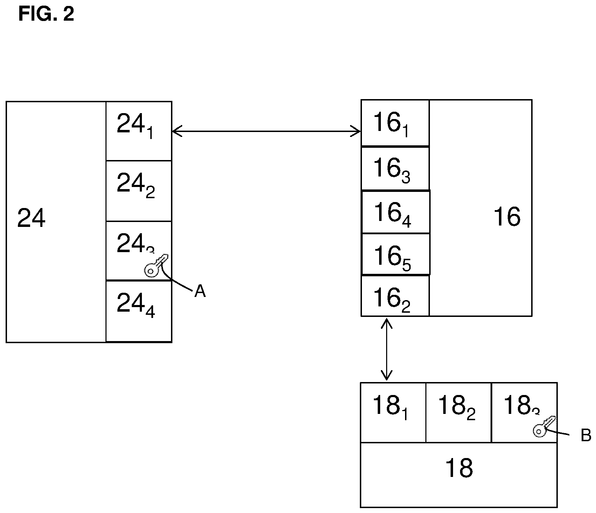

Comme plus visible sur la figure 2, le terminal 24 comporte une interface de communication 24₁. L'interface de communication permet l'émission et/ou la réception de données sans fil. La portée de l'interface de communication est notamment inférieure à 10 m, de préférence inférieure de 1 m ou même 50 cm. Alors l'énergie nécessaire au fonctionnement du dispositif d'accès 20 est réduite.

De préférence, la technologie sans fil est de type Near Field Communication (NFC) ou Radio Frequency Identification (RFID). Alors, l'interface de communication 24₁ peut échanger des données avec le dispositif de communication 16 sans intervention de l'utilisateur, en particulier lors d'une première connexion. En variante, la technologie sans fil peut être Bluetooth, Bluetooth Low Energy (BLE) ou un réseau local sans fil (Wireless Local Area Network, WLAN).

Le terminal 24 comporte en outre un gestionnaire d'authentification 24₂. Le gestionnaire d'authentification comprend des données permettant d'identifier la validité du jeton électronique JT présenté à l'interface de communication 24₁. Lorsque la validité du jeton électronique est vérifiée, le gestionnaire d'authentification peut commander le déverrouillage de l'organe de verrouillage 22. L'utilisateur peut alors accéder au conteneur 12 pour y déposer ses déchets 13.

Le terminal 24 comporte une mémoire 24s. La mémoire permet d'enregistrer un historique d'accès d'une pluralité d'utilisateurs au conteneur 12. La mémoire peut également sauvegarder les données mesurées par le ou les capteurs 19 et/ou l'accessoire de captation 25 du conteneur 12. L'interface de communication 24₁ peut envoyer les données sauvegardées en mémoire lors de la proximité du dispositif de communication 16 au terminal 24.

Par ailleurs, la mémoire 24₃ peut également contenir des données introduite avant la mise en service du terminal 24 sur le conteneur. Ces données peuvent inclure une ou plusieurs clés de cryptage A permettant de vérifier l'authenticité du jeton électronique. Ces données peuvent également inclure un élément d'identification unique du terminal (analogue à un numéro de série).

Le terminal 24 peut être équipé d'une antenne GPS 24₄. L'antenne GPS permet au terminal d'obtenir une date et une heure. Ainsi, le terminal 24 peut horodater chaque accès au conteneur 12. En outre, le terminal peut horodater les mesures du ou des capteurs 19.

De plus, grâce au GPS et à une connaissance précise de l'heure universelle courante, cette heure universelle courante peut être utilisée comme donnée d'entrée ou paramètre dans le processus de vérification du jeton susmentionné.

### 2. Dispositif de communication

Le dispositif de communication 16 est associé à l'utilisateur. De manière préféré, le dispositif de communication est le smartphone de l'utilisateur. En effet, les smartphones sont très répandus et sont souvent transportés avec l'utilisateur lors de ses déplacements. Cependant, le dispositif de communication peut être une tablette, une montre communicante 'smartwatch' ou un ordinateur portable.

Le dispositif de communication 16 est pourvu d'une première interface de communication 16₁ permettant l'émission et/ou la réception de données sans fil. La première interface de communication utilise la même technologie que le terminal 24 du conteneur 12, pour échanger opérationnellement des signaux électromagnétiques avec l'interface de communication 24₁ du terminal 24. La première interface de communication 16₁ peut alors présenter le jeton électronique JT au dispositif d'accès 20 du conteneur 12. La première interface de communication 16₁ peut également recevoir les données sauvegardées en mémoire du dispositif d'accès 20.

Le dispositif de communication 16 est également pourvu d'une deuxième interface de communication 16₂, également sans fil. La portée de la deuxième interface de communication est notamment supérieure à 2 km, de préférence supérieure à 10 km, voire jusqu'à des valeurs supérieures à 20 km (hors relayage). La deuxième interface de communication permet une connexion au serveur 18, distant du dispositif de communication 16.

De préférence, la deuxième interface de communication 16₂ exploite un réseau de télécommunication cellulaire 28. Le réseau de communication cellulaire peut par exemple être GSM, 3G, 4G, 5G,4G-LTE. Cependant, la deuxième interface 16₂ peut également exploiter une passerelle connectée au réseau cellulaire. La passerelle peut notamment être un routeur, par exemple un routeur Wi-fi connecté au réseau cellulaire.

Le dispositif de communication 16 comporte également un gestionnaire d'identification 16₃. Le gestionnaire d'identification permet le téléchargement de jetons électronique lorsque la deuxième interface de communication 16₂ est connectée au serveur 18. Le téléchargement de jetons électronique peut par exemple être effectué via une application sur le dispositif de communication 16.

Le gestionnaire d'identification 16₃ sauvegarde le ou les jetons électroniques téléchargés. Avantageusement, le jeton électronique permet l'accès au conteneur 12 même lorsque le dispositif de communication 16 n'est pas connecté au réseau cellulaire 28. En effet, l'accès au conteneur 12 ne nécessite pas de communication avec le serveur 18 lorsque le jeton électronique est téléchargé.

Le gestionnaire d'identification 16₃ permet également la sélection parmi une pluralité de conteneurs. Alors, le dispositif de communication 16 peut sélectionner le jeton électronique JT autorisant l'accès au conteneur choisi.

La sélection peut s'effectuer par un choix de l'utilisateur, notamment via l'application sur le dispositif de communication 16. L'application peut notamment afficher à l'utilisateur les conteneurs utilisés précédemment. L'application peut également afficher les conteneurs à proximité de l'utilisateur.

En variante, l'utilisateur peut informer le dispositif de communication 16 du conteneur choisi. Alors, l'application peut permettre à l'utilisateur de scanner un code sur le conteneur choisi. Le dispositif de communication peut également automatiquement détecter la proximité du conteneur choisi, sans action de l'utilisateur.

Le dispositif de communication 16 comporte également une mémoire 16₄. La mémoire sauvegarde l'accès au conteneur 12 par l'utilisateur. La mémoire sauvegarde également les données reçues du dispositif d'accès 20 du conteneur 12.

Le dispositif de communication 16 peut envoyer les données sauvegardées en mémoire 16₄ lorsque le dispositif de communication est connecté au serveur 18. Les données sauvegardées peuvent être envoyées en différé, lorsque le dispositif de communication est connecté au réseau cellulaire 28. Ainsi, le conteneur 12 peut être situé dans une zone blanche, dépourvu d'une couverture par le réseau cellulaire 28, sans compromettre la transmission de données vers le serveur 18.

L'envoi des données sauvegardées en mémoire 16₄ peut se faire automatiquement, lorsque le dispositif de communication 16 est connecté au réseau cellulaire 28. Alors, les données peuvent être reçues par le serveur 18 sans nécessiter d'action de l'utilisateur.

Le dispositif de communication 16 comporte également un récepteur / une antenne GPS 16₅ avec une antenne de réception des signaux et une fonction de décodage. Le récepteur GPS permet de déterminer la géo position du dispositif de communication 16. Alors, le dispositif de communication 16 peut informer l'utilisateur de conteneurs à proximité. Le dispositif de communication 16 peut également suggérer le téléchargement de jetons électroniques appropriés à la géo-position de l'utilisateur.

Le récepteur GPS permet également au dispositif de communication 16 de pouvoir connaître précisément l'heure universelle courante.

### 3. Serveur

Le serveur 18 est pourvu d'une interface de communication 18₁ permettant l'émission et/ou la réception de données sans fil. L'interface de communication 18₁ est connectée au réseau cellulaire 28. Ainsi, lorsque le dispositif de communication 16 est connecté au réseau cellulaire, le serveur 18 reçoit les données provenant du terminal 24 du dispositif d'accès 20, transmises par le dispositif de communication 16 en temps réel ou en différé. Le serveur 18 peut également envoyer un ou plusieurs jetons électroniques vers le dispositif de communication 16.

On notera que le serveur 18 reçoit l'historique d'accès au conteneur 12 par une pluralité de dispositifs de communication 16. En effet, l'accès par l'utilisateur, sauvegardé dans l'historique, peut être envoyé vers le serveur par plusieurs dispositifs de communication utilisés pour accéder au conteneur 12. Avantageusement, la redondance des données envoyées au serveur 18 permet une vérification des données. La facturation éventuelle de l'utilisateur est alors plus sécurisée.

Le serveur comprend en outre un gestionnaire de jetons 18₃. Le gestionnaire de jetons permet de générer des jetons électroniques JT autorisant l'accès au conteneur 12. Les jetons sont notamment générés lorsque l'utilisateur effectue une demande de téléchargement de jeton, par exemple depuis l'application du dispositif de communication 16. Par ailleurs, le gestionnaire de jetons comporte une ou plusieurs clés de cryptage B, permettant de crypter une signature du jeton électronique généré. La signature du jeton peut par la suite être décryptée par la clé A du terminal 24, pour assurer l'authenticité du jeton.

Le serveur 18 comprend également une base de données 18₂. La base de données permet de centraliser les données d'une pluralité de conteneurs et d'utilisateurs. Ainsi, la base de données peut notamment être exploitée pour facturer l'utilisateur en fonction des accès effectués sur différents conteneurs.

La base de données 18₂ peut également être exploitée pour surveiller une variation du niveau de remplissage du conteneur en fonction des données du ou des capteurs 19 ou du nombre d'accès. La base de données peut alors permettre la gestion du ramassage des déchets reçus dans le conteneur 12 par l'organisation chargée de l'exploitation. La base de données peut également permettre de prévoir l'installation de nouveaux conteneurs, ou un besoin d'entretien d'un conteneur.

On note que le serveur 18 peut faire partie intégrante d'une architecture de ressources distribuées (architecture 'cloud').

On notera également que la transmission et le stockage des données peut exploiter une technologie « block-chain », à savoir la construction coopérative de tout ou partie des données dans un réseau. Le transfert des données est alors décentralisé, et les données peuvent être vérifiées par le réseau, permettant une meilleure sécurité de transmission et de stockage.

### 4. Jetons électroniques

Les jetons électroniques JT correspondent à des clés électroniques autorisant l'accès au conteneur 12. Les jetons électroniques sont par exemple des JSON Web Token (JWT).

Les jetons électroniques comportent une entête. L'entête contient le type de jeton, par exemple JWT, et l'algorithme de chiffrement à utiliser.

Les jetons comportent en outre une charge utile. La charge contient les données échangées avec le terminal 24.

La charge utile peut contenir la spécificité du jeton électronique. Les jetons électroniques peuvent être spécifiques à une zone géographique. Dans ce cas, ils permettent l'accès à tous les conteneurs dans la zone géographique considérée. Les jetons électroniques peuvent être spécifiques à un domaine, par exemple pour les ménages ou les milieux professionnels. Alors, les jetons autorisent l'accès aux conteneurs réservés au domaine choisi. Les jetons électroniques peuvent également être spécifiques à un flux de déchets 13. Par exemple, l'utilisateur peut télécharger un jeton pour le dépôt de ses ordures ménagères, de verre, de carton ou de papier et /ou de plastique (emballage). Alors, les jetons autorisent l'accès aux conteneurs réservés au flux choisi. Les jetons électroniques peuvent en outre être spécifiques à un unique conteneur. Alors, les jetons sont sensibles à un identifiant du conteneur.

La charge utile peut comporter un identifiant de l'utilisateur. Ainsi, la charge utile permet de retrouver l'utilisateur demandant l'accès au conteneur. L'utilisateur associé peut être suivi, notamment à des fins de facturation. L'utilisateur peut être identifié via l'application sur le dispositif de communication, en entrant un identifiant et un mot de passe correspondant à l'utilisateur.

La charge utile peut également comprendre un identifiant du dispositif de communication 16 associé à l'utilisateur. Alors, le jeton électronique ne peut être utilisé que par un unique dispositif de communication, contribuant à augmenter la sécurité des jetons, qui ne peuvent être partagés entre différents dispositifs de communication.

Chaque jeton peut autoriser une pluralité d'accès au conteneur 12. Alors, la charge utile du jeton peut comporter une date d'expiration. Les accès sont d'avantages sécurisés, où seuls les jetons téléchargés récemment peuvent être utilisés. En outre, la date d'expiration permet de s'assurer que le dispositif de communication 16 est régulièrement connecté au serveur 18 pour le téléchargement de jetons valides. Les données en mémoire du dispositif de communication 16 sont alors régulièrement envoyées au serveur 18.

De manière préférée, la date d'expiration du jeton est d'un mois. En effet, cette durée permet de facturer l'utilisateur mensuellement.

Dans un exemple préféré, chaque jeton autorise une pluralité d'accès à une pluralité conteneurs. La pluralité de conteneur peut comprendre des conteneurs dans la même zone géographique, spécifique à un flux de déchets et/ou à un domaine. L'utilisateur peut télécharger le jeton une seule fois pour lui permettre d'effectuer une pluralité de dépôts. Il n'a pas besoin de penser à télécharger un jeton lors de chaque dépôt ou selon le type de déchets qu'il souhaite déposer. Le processus de dépôt des déchets est simplifié pour l'utilisateur.

En variante, chaque jeton peut être à usage unique, et autoriser un unique accès au conteneur. Autrement dit, un accès au conteneur 12 correspond à l'utilisation d'un jeton. Alors, il peut être prévu qu'un jeton, une fois utilisé sur un conteneur, soit grillé ou inhibé pour qu'une prochaine tentative d'accès soit refusée. Il apparaît possible pour les utilisateurs de passage dans la collectivité de télécharger des jetons à usage unique pour accéder au conteneur.

En outre, le jeton comporte une signature numérique. La signature numérique permet la vérification de l'intégrité des données contenues dans le jeton. A cet effet, la signature numérique du jeton électronique est cryptée par la clé B du serveur 18. La signature numérique est décryptée par la clé A en mémoire du terminal 24, permettant de vérifier que la charge utile du jeton n'a pas été modifiée, et que le jeton est authentique.

Les jetons peuvent être téléchargés depuis l'application sur le dispositif de communication 16. L'utilisateur peut alors avoir un identifiant et un mot de passe pour accéder au téléchargement de jetons.

Les utilisateurs de passage peuvent créer un compte sur l'application pour accéder à des jetons à usage unique. Les utilisateurs de passage peuvent payer pour télécharger des jetons à usage unique, ce qui facilite la facturation des utilisateurs de passage pour le dépôt de leurs déchets.

### 5. Aspect de procédé

Le système décrit ci-avant fonctionne par la mise en oeuvre d'un procédé P1 de téléchargement de jeton électronique, d'un procédé P2 de dépôt des déchets et d'un procédé P3 d'envoi des données vers le serveur.

Le procédé de téléchargement de jeton électronique P1 est mis en oeuvre par communication entre le serveur 18 et le dispositif de communication 16, ici le smartphone 16, de l'utilisateur. Ce procédé peut être mis en oeuvre lorsque l'utilisateur est à distance du conteneur 12.

Le procédé de téléchargement comprend une première étape E1 dans laquelle l'utilisateur s'identifie auprès du serveur 18. L'utilisateur peut entrer un identifiant et un mot de passe sur son smartphone, envoyé au serveur. Le serveur 18 peut alors authentifier l'utilisateur (étape E2).

Lorsque l'utilisateur a été identifié, il peut effectuer une demande de jeton(s) auprès du serveur 18 (étape E3). L'utilisateur récupérera des jetons à jour en fonction de ses droits permettant d'accéder notamment aux conteneurs appartenant à une zone géographique, à un domaine, à un flux ou à des conteneurs individuels. L'utilisateur peut également demander un jeton à usage unique.

L'étape E4, mise en oeuvre par le serveur 18, consiste à générer le ou les jeton(s) demandé(s) par l'utilisateur. Le (ou les) jeton généré comporte, notamment en charge utile, l'identifiant de l'utilisateur et de son smartphone, une date d'expiration, ainsi que les spécificités du jeton. Le (ou les) jeton comporte en outre une signature numérique cryptée par la clé B du serveur 18. Le (ou les) jeton généré est envoyé vers le smartphone de l'utilisateur.

Ainsi, l'étape E5 consiste à sauvegarder le jeton sur le smartphone 16 de l'utilisateur. Alors, le jeton est accessible même si le smartphone de l'utilisateur n'est pas connecté au réseau cellulaire 28. Il est à noter que l'utilisateur pourrait télécharger une pluralité de jetons différents sur le smartphone 16.

Le procédé P2 de dépôt des déchets dans le conteneur 12 peut ensuite être mis en oeuvre. Ce procédé est mis en oeuvre par communication entre le terminal 24 et le smartphone 16.

Initialement, l'utilisateur sélectionne un conteneur 12 pour le dépôt des déchets (Etape E6). Le smartphone 16 peut proposer des conteneurs à proximité, ou des conteneurs déjà utilisés. L'utilisateur peut également se rendre à proximité du conteneur et informer le smartphone 16 de son choix, par exemple en scannant un code sur le conteneur 12. Le smartphone 16 peut également automatiquement reconnaître le conteneur 12 à proximité.

Alors, à l'étape E7, le smartphone 16 peut sélectionner parmi une pluralité de jetons sauvegardés le jeton permettant l'accès au conteneur sélectionné. Par exemple, le smartphone sélectionne le jeton spécifique à la zone géographique dans laquelle se trouve le conteneur. Selon un autre exemple, le smartphone sélectionne le jeton spécifique aux ordures ménagères parmi des jetons spécifique au verre, au carton ou au plastique. Selon encore un autre exemple, le smartphone sélectionne le jeton spécifique au conteneur choisi par l'utilisateur.

L'étape E8 consiste à présenter le jeton au dispositif d'accès 20 (en particulier au terminal 24) du contener 12, à des fins de contrôle d'accès.

L'étape E9, mise en oeuvre par le terminal 24, consiste à vérifier le jeton présenté, pour autoriser ou refuser l'accès au conteneur 12, via l'activation conditionnelle de l'organe de verrouillage 22.

Le terminal peut vérifier l'authenticité du jeton par décryptage de la signature numérique du jeton avec la clé A contenue en mémoire du terminal 24, et par contrôle de la charge utile du jeton. Si le jeton présenté n'appartient pas à la zone géographique du conteneur, ou si le conteneur est réservé à un domaine ou un flux différent du jeton présenté, alors l'accès peut être refusé. Si le jeton présenté n'appartient pas au dispositif de communication associé au jeton, alors l'accès peut être refusé. Par ailleurs, si le jeton a dépassé sa date d'expiration, ou qu'il a déjà été utilisé dans le cas d'un jeton à usage unique, alors l'accès peut également être refusé.

Par ailleurs, lors de la présentation du jeton de l'étape E8, le terminal 24 peut mettre à disposition les données sauvegardées en mémoire 24₃ du terminal (étape E10). L'historique d'accès et/ou des données de capteurs du conteneur sont reçues par le smartphone 16 (étape E11).

Le smartphone 16 et le terminal 24 du dispositif d'accès 20 enregistrent chacun l'accès effectué par l'utilisateur qui a occasionné un dépôt effectif d'un ou plusieurs sacs de déchets. Le terminal 24 met alors à jour son historique. Le nouvel historique peut être envoyé à un dispositif de communication présenté ultérieurement, lors d'un autre accès au conteneur 12.

Le procédé P3 d'envoi des données comporte une étape E12 d'envoi des données du smartphone 16 vers le serveur 18 et une étape E13 de réception des données par le serveur 18. Le procédé P3 s'effectue notamment en différé de l'accès au conteneur 12, lorsque le smartphone 16 est connecté au serveur 18. Le serveur reçoit alors l'historique d'accès et/ou les données du ou des capteurs 19. Le serveur 18 peut alors gérer la facturation de l'utilisateur et/ou le ramassage des déchets.

L'invention ne se limite pas aux seuls exemples présentés ci-dessus mais est au contraire susceptible de nombreuses variantes accessibles à l'homme de l'art.

Dans une variante de réalisation, les jetons peuvent être téléchargés depuis un point de service centralisé, parfois appelé « *totem »,* dans certains lieux comme un port de plaisance. Alors, le point d'apport peut être utilisé par une pluralité d'utilisateurs de passage. Le point de service centralisé permet à ces utilisateurs de charger dans leur smartphone un ou plusieurs jetons en payant sur le champ, sans facturation future. Dans ces conditions, il faut considérer que l'équipement électronique du point de service centralisé dit « *totem* » fait partie du serveur 18 au sens de la présente invention.

Par ailleurs, le système et la méthode pourraient être mis en oeuvre dans le domaine de l'éclairage public. Le système de contrôle d'accès peut alors contrôler l'accès à une ou plusieurs armoires d'éclairage public. Un opérateur peut alors accéder à la ou les armoires, par exemple pour effectuer la maintenance de l'éclairage public d'un quartier.

## Revendications

1. Système de contrôle d'accès (10) d'un utilisateur à un conteneur de déchets (12) comprenant :
- au moins un dispositif de communication (16), chaque dispositif de communication étant associé à un utilisateur ;
- un dispositif d'accès (20) agencé sur le conteneur; et
- un serveur (18), distant du dispositif d'accès et dépourvu de moyens de communication avec le dispositif d'accès;
dans lequel
un contrôle d'accès est réalisé exclusivement par échanges de données entre le dispositif de communication (16) et le dispositif d'accès (20), une autorisation d'accès étant obtenue préalablement par téléchargement d'au moins un jeton électronique depuis le serveur (18) vers le dispositif de communication (16),
et dans lequel,
le dispositif d'accès (20) comprend un terminal (24) comprenant une interface de communication (24₁), et le dispositif d'accès (20) n'est pas connecté au réseau de télécommunication à moyenne ou longue portée ;
le dispositif de communication (16) comprend une première interface de communication (16₁) utilisant la même technologie que le terminal (24) du conteneur (12), pour échanger opérationnellement des signaux électromagnétiques avec l'interface de communication (24₁) du terminal (24) et une deuxième interface de communication (16₂) exploitant un réseau de télécommunication cellulaire (28) ; et
le serveur (18) comprend une interface de communication connectée au réseau cellulaire (28) et configurée pour permettre une connexion avec la deuxième interface de communication (16₂) du dispositif de communication (16),
dans lequel le jeton est présenté au dispositif d'accès (20) du conteneur (12), à des fins de contrôle d'accès, puis le terminal (24) vérifie le jeton présenté pour autoriser ou refuser l'accès au conteneur, via l'activation conditionnelle d'un organe de verrouillage (22) dudit conteneur,
**caractérisé en ce que** le terminal (24) comporte une mémoire (24₃) permettant d'enregistrer un historique d'accès d'une pluralité d'utilisateurs au conteneur (12),
et **en ce que** l'échange de données lors du contrôle d'accès comprend l'envoi de l'historique d'accès vers le dispositif de communication (16), l'historique étant par la suite envoyé au serveur (18) par le dispositif de communication (16).

2. Système selon la revendication 1, dans lequel chaque jeton électronique est spécifique à l'utilisateur et/ou au dispositif de communication (16) associé à l'utilisateur.

3. Système selon la revendication 1 ou 2, dans lequel chaque jeton électronique est spécifique à au moins un parmi : une géo-position du conteneur (12), un flux de déchets destiné à être reçu dans le conteneur (12), un domaine d'activité ou un conteneur.

4. Système selon l'une quelconque des revendications précédentes, dans lequel chaque jeton électronique comporte une date d'expiration et/ou autorise un unique accès au conteneur (12).

5. Système selon l'une quelconque des revendications précédentes, dans lequel un accès au conteneur (12) avec dépôt effectif est enregistré par le dispositif de communication (16), ledit accès au conteneur avec dépôt effectif étant par la suite envoyé au serveur (18) par le dispositif de communication (16).

6. Système selon l'une quelconque des revendications précédentes, comprenant au moins un capteur (19), associé au conteneur (12), de préférence un capteur de niveau de remplissage du conteneur, l'échange de données lors du contrôle d'accès comprend l'envoi des données du ou de chaque capteur (19) vers le dispositif de communication (16), les données étant par la suite envoyées au serveur (18) par le dispositif de communication (16).

7. Système selon l'une quelconque des revendications précédentes, dans lequel le dispositif de communication (16) est configuré pour permettre à l'utilisateur d'effectuer un choix parmi une pluralité de conteneurs (12).

8. Procédé de contrôle d'accès d'un utilisateur à un conteneur (12) de déchets, exploitant le système selon l'une quelconque des revendications précédentes, comprenant:
- par le dispositif de communication (16) : obtenir une autorisation d'accès par téléchargement d'au moins un jeton électronique depuis le serveur (18) sur le dispositif de communication (16);
- effectuer un contrôle d'accès par échange de données entre le dispositif d'accès (20) et le dispositif de communication (16), comprenant de présenter le jeton au dispositif d'accès (20) du conteneur (12);
- enregistrer l'accès effectué sur le dispositif d'accès (20) et le dispositif de communication (16);
- envoyer l'accès effectué vers le serveur (18) par le dispositif de communication (16),
**caractérisé en ce que** l'échange de données comprend en outre l'envoi d'un historique d'accès d'une pluralité d'utilisateurs au conteneur (12), enregistré par le dispositif d'accès (24), vers le dispositif de communication (16), puis vers le serveur (18).

9. Procédé selon la revendication précédente comportant, avant le contrôle d'accès, la sélection d'un conteneur (12) sur le dispositif de communication (16).

10. Procédé selon la revendication 8 ou 9, dans lequel l'échange de données comprend en outre l'envoi de données d'au moins un capteur (19), associé au conteneur (12), vers le dispositif de communication (16) pour être envoyés vers le serveur (18).

## Patentansprüche

1. System zur Kontrolle des Zugangs (100) eines Nutzers zu einem Abfallbehälter (12), aufweisend:
- mindestens eine Kommunikationsvorrichtung (16), wobei jede Kommunikationsvorrichtung einem Nutzer zugeordnet ist;
- eine an dem Behälter angeordnete Zugangsvorrichtung (20); und
- einen Server (18) fernab der Zugangsvorrichtung und ohne eine Einrichtung zur Kommunikation mit der Zugangsvorrichtung;
in welchem
eine Zugangskontrolle ausschließlich durch Austausch von Daten zwischen der Kommunikationsvorrichtung (16) und der Zugangsvorrichtung (20) durchgeführt wird, wobei eine Zugangsgenehmigung vorab durch Herunterladen mindestens eines elektronischen Jetons von dem Server (18) zu der Kommunikationsvorrichtung (16) abgerufen wird,
und in welchem
die Zugangsvorrichtung (20) ein Endgerät (24) mit einer Kommunikationsschnittstelle (24₁) aufweist, und die Zugangsvorrichtung (20) nicht mit einem Telekommunikationsnetz mittlerer oder großer Reichweite verbunden ist;
die Kommunikationsvorrichtung (16) aufweist: eine erste Kommunikationsschnittstelle (16₁), die die gleiche Technologie wie das Endgerät (24) des Behälters (12) verwendet, um operativ elektromagnetische Signale mit der Kommunikationsschnittstelle (24₁) des Endgeräts (24) auszutauschen, und eine zweite Kommunikationsschnittstelle (16₂), die ein Mobilfunk-Kommunikationsnetz (28) nutzt; und der Server (18) eine Kommunikationsschnittstelle aufweist, die mit dem Mobilfunknetz (28) verbunden ist und konfiguriert ist, um eine Verbindung mit der zweiten Kommunikationsschnittstelle (16₂) der Kommunikationsvorrichtung (16) zu erlauben,
in welchem der Jeton zum Zwecke der Zugangskontrolle der Zugangsvorrichtung (20) des Behälters (12) präsentiert wird, dann das Endgerät (24) den präsentierten Jeton verifiziert, um den Zugang zu dem Behälter via die konditionelle Aktivierung eines Verriegelungsteils (22) des Behälters zu genehmigen oder zu verweigern,
**dadurch gekennzeichnet, dass** das Endgerät (24) einen Speicher (24₃) aufweist, der erlaubt, eine Zugangshistorie mehrerer Nutzer zu dem Behälter (12) zu registrieren, und dadurch, dass der Austausch von Daten bei der Zugangskontrolle das Schicken der Zugangshistorie zu der Kommunikationsvorrichtung (16) aufweist, wobei die Historie anschließend von der Kommunikationsvorrichtung (16) zu dem Server (18) geschickt wird.

2. System nach Anspruch 1, in welchem jeder elektronische Jeton spezifisch für den Nutzer und/oder für die dem Nutzer zugeordnete Kommunikationsvorrichtung (16) ist.

3. System nach Anspruch 1 oder 2, in welchem jeder elektronische Jeton spezifisch für eine geographische Position des Behälters (12) und/oder einen Abfallstrom, der in dem Behälter (12) aufgenommen werden soll, und/oder ein Tätigkeitsgebiet oder und/oder einen Behälter ist.

4. System nach einem der vorstehenden Ansprüche, in welchem jeder elektronische Jeton ein Ablaufdatum aufweist und/oder einen einmaligen Zugang zu dem Behälter (12) genehmigt.

5. System nach einem der vorstehenden Ansprüche, in welchem ein Zugang zu dem Behälter (12) mit vollzogener Ablagerung von der Kommunikationsvorrichtung (16) registriert wird, wobei der Zugang zu dem Behälter mit vollzogener Ablagerung anschließend von der Kommunikationsvorrichtung (16) zu dem Server (18) geschickt wird.

6. System nach einem der vorstehenden Ansprüche, aufweisend mindestens einen mit dem Behälter (12) assoziierten Sensor (19), vorzugsweise einen Füllstand-Sensor des Behälters, wobei der Austausch von Daten bei der Zugangskontrolle das Schicken der Daten des oder jedes Sensors (19) zu der Kommunikationsvorrichtung (16) aufweist, und die Daten anschließend von der Kommunikationsvorrichtung (16) zu dem Server (18) geschickt werden.

7. System nach einem der vorstehenden Ansprüche, in welchem die Kommunikationsvorrichtung (16) konfiguriert ist, um den Nutzer zu erlauben, eine Auswahl aus mehreren Behältern (12) vorzunehmen.

8. Verfahren zur Kontrolle des Zugangs eines Nutzers zu einem Abfallbehälter (12) unter Verwendung des Systems nach einem der vorstehenden Ansprüche, aufweisend:
- mithilfe der Kommunikationsvorrichtung (16): Abrufen einer Zugangsgenehmigung durch Herunterladen mindestens eines elektronischen Jetons von dem Server (18) auf die Kommunikationsvorrichtung (16);
- Durchführen einer Zugangskontrolle durch Austausch von Daten zwischen der Zugangsvorrichtung (20) und der Kommunikationsvorrichtung (16), aufweisend das Präsentieren des Jetons der Zugangsvorrichtung (20) des Behälters (16);
- Registrieren des vollzogenen Zugangs auf der Zugangsvorrichtung (20) und der Kommunikationsvorrichtung (16);
- Schicken des vollzogenen Zugangs zu dem Server (18) mithilfe der Kommunikationsvorrichtung (16),
**dadurch gekennzeichnet, dass** der Austausch von Daten ferner das Schicken einer von der Zugangsvorrichtung (24) registrierten Zugangshistorie mehrerer Nutzer zu dem Behälter zu der Kommunikationsvorrichtung (16), dann zu dem Server (18) aufweist.

9. Verfahren nach dem vorstehenden Anspruch, aufweisend vor der Zugangskontrolle die Auswahl eines Behälters (12) auf der Kommunikationsvorrichtung (16).

10. Verfahren nach Anspruch 8 oder 9, in welchem der Austausch von Daten ferner das Schicken von Daten mindestens eines mit dem Behälter (12) assoziierten Sensors (19) zu der Kommunikationsvorrichtung (16) aufweist, damit sie zu dem Server (18) geschickt werden.

## Claims

1. A system for controlling access (10) of a user to a waste container (12), comprising:
- at least one communication device (16), each communication device being associated with a user;
- an access device (20) arranged on the container; and
- a server (18), remote from the access device and devoid of means for communicating with the access device;
wherein
access control is carried out exclusively by data exchanges between the communication device (16) and the access device (20), an access authorization being obtained beforehand by downloading of at least one electronic token from the server (18) to the communication device (16),
and wherein
the access device (20) comprises a terminal (24) comprising a communication interface (24₁), and the access device (20) is not connected to a medium- or long-range telecommunications network;
the communication device (16) comprises a first communication interface (16₁) which uses the same technology as the terminal (24) of the container (12), for operationally exchanging electromagnetic signals with the communication interface (24₁) of the terminal (24), and a second communication interface (16₂) making use of a cellular telecommunications network (28); and
the server (18) comprises a communication interface connected to the cellular network (28) and configured to allow a connection with the second communication interface (16₂) of the communication device (16),
wherein the token is presented to the access device (20) of the container (12), for access control purposes, then the terminal (24) checks the presented token in order to allow or deny access to the container, via the conditional activation of a locking member (22) of said container,
**characterized in that** the terminal (24) comprises a memory (24s) which allows recording a log of accesses to the container (12) by a plurality of users,
and **in that** the data exchange during access control comprises sending the access log to the communication device (16), the log subsequently being sent to the server (18) by the communication device (16).

2. The system according to claim 1, wherein each electronic token is specific to the user and/or to the communication device (16) associated with the user.

3. The system according to claim 1 or 2, wherein each electronic token is specific to at least one among: a geolocation of the container (12), a waste stream intended to be received in the container (12), a business sector, or a container.

4. The system according to any one of the preceding claims, wherein each electronic token has an expiration date and/or authorizes a single access to the container (12).

5. The system according to any one of the preceding claims, wherein access to the container (12) with actual deposit being made is recorded by the communication device (16), said access to the container with actual deposit being made then being sent to the server (18) by the communication device (16).

6. The system according to any one of the preceding claims, comprising at least one sensor (19) associated with the container (12), preferably a fill-level sensor for the container, the data exchange during access control comprising sending of data from the or from each sensor (19) to the communication device (16), the data then being sent to the server (18) by the communication device (16).

7. The system according to any one of the preceding claims, wherein the communication device (16) is configured to allow the user to choose among a plurality of containers (12).

8. A method for controlling access of a user to a waste container (12), using of the system according to any one of the preceding claims, comprising:
- by the communication device (16): obtaining an access authorization by downloading at least one electronic token from the server (18) to the communication device (16);
- carrying out access control by exchanging data between the access device (20) and the communication device (16), which includes presenting the token to the access device (20) of the container (12);
- recording the performed access on the access device (20) and on the communication device (16);
- sending the performed access to the server (18) via the communication device (16),
**characterized in that** the data exchange further comprises sending a log of accesses to the container (12) by a plurality of users, recorded by the access device (24), to the communication device (16), then to the server (18).

9. The method according to the preceding claim, comprising selection of a container (12), on the communication device (16) before the access control.

10. The method according to claim 8 or 9, wherein the data exchange further comprises sending of data to the communication device (16) from at least one sensor (19) associated with the container (12), in order to send the data to the server (18).
